# EUROPÄISCHE PATENTSCHRIFT

(11) **EP 1 564 866 B1**
(45) Veröffentlichungstag und Bekanntmachung des Hinweises auf die Patenterteilung: **19.12.2018**
(21) Anmeldenummer: 05002220.1
(22) Anmeldetag: 03.02.2005
(51) Int. Cl.: F16C 17/08, F16C 23/04, H02K 5/167, F04D 29/04

(54) **Sphärisches Lager, Elektromotor und Umwälzpumpe**
Spherical bearing, electromotor and circulating pump
Palier sphérique, moteur électrique et pompe de circulation

(30) Priorität: 12.02.2004 DE 102004008158
(43) Veröffentlichungstag der Anmeldung: 17.08.2005
(73) Patentinhaber: Xylem IP Holdings LLC, White Plains, NY 10604 (US)
(72) Erfinder: Laing, Karsten, 71566 Althütte (DE); Ternak, Janos, 2700 Cegled (HU)
(74) Vertreter: Lenzing Gerber Stute

(56) Entgegenhaltungen:
- DE-A1- 10 245 015
- DE-A1- 10 245 016
- DE-U1- 8 707 360
- US-A- 3 558 948
- US-A- 4 043 706
- US-A- 4 874 300
- US-A1- 2003 228 079

## Beschreibung

Die Erfindung betrifft einen Elektromotor mit einem Rotor, einem Stator und einem sphärischen Lager, umfassend einen Lagerkörper mit einer konvexen sphärischen Oberfläche, einen Halter, an dem der Lagerkörper angeordnet ist, und eine Lagerschale mit einer konkaven sphärischen Oberfläche, wobei die Lagerschale auf dem Lagerkörper drehbar gelagert ist und mit dem Rotor verbunden ist.

Aus der DE 102 45 015 A1 ist eine Umwälzpumpe mit einem derartigen Elektromotor mit den Merkmalen des Oberbegriffs des Anspruchs 1, umfassend einen Läufer und einen Stator, bekannt, wobei der Läufer sphärisch gelagert ist. Der Läufer ist magnetfelderzeugend und dem Stator zugewandt sphärisch ausgebildet. Läufer und Stator sind so angepaßt ausgebildet, daß eine axiale magnetische Haltekraft, welche den Läufer an einem sphärischen Lager hält, größer ist als eine maximale axiale Gegenkraft. Zwischen dem Läufer und dem Stator ist eine Trennwand aus einem elektrisch nicht leitenden Werkstoff angeordnet.

Der Lagerkörper muß auf dem Halter fixiert werden. Aus der DE 36 36 941 A1 ist es bekannt, die Lagerkugel mit einer Bohrung zu versehen, in die das der Kugel zugewandte Ende einer Lagersäule als Halter hineinragt.

Aus der DE 37 44 101 A1 ist eine Lagerkugelbefestigung bekannt, wobei die Kugel aus keramischem Hartstoff besteht und eine Bohrung aufweist, über welche eine Befestigung an der Lagersäule durch Form- oder Reibschluß erfolgt.

Lagerkörper und insbesondere Lagerkugeln können einen Durchmesser aufweisen, der 6 mm beträgt oder kleiner ist. Entsprechend kleine Bohrungen sind dann in solche Lagerkörper einzubringen. Dies ist insbesondere im Zusammenhang mit keramischen Materialien mit einem hohen Aufwand verbunden. Ein erheblicher Anteil der Kosten einer Umwälzpumpe mit einem solchen sphärischen Lager sind auf die Herstellung einer Bohrung in dem Lagerkörper zurückzuführen.

Der Erfindung liegt davon ausgehend die Aufgabe zugrunde, den eingangs genannten Elektromotor so zu verbessern, daß die Befestigung des Lagerkörpers an dem Halter auf einfache und kostengünstige Weise durchführbar ist.

Diese Aufgabe wird nach dem unabhängigen Anspruch 1 bei dem eingangs genannten Elektromotor erfindungsgemäß dadurch gelöst, dass der Halter aus einem Kunststoffmaterial hergestellt ist und dass der Lagerkörper in den Halter zur Ausbildung einer Verdrehsicherung eingespritzt ist, wobei die Verdrehsicherung den Lagerkörper drehfest am Halter hält.

Weiter ist in den unabhängigen Anspruch 22 eine Verwendung des Elektromotors in einer Umwälzpumpe definiert.

Mittels der Verwendung eines Kunststoffmaterials läßt sich ein Halter auf einfache Weise herstellen. Insbesondere läßt sich ein Halter integral mit Wänden herstellen, welche einen Luftspalt begrenzen. Die Begrenzungswände für einen Luftspalt lassen sich wiederum dann aus einem Kunststoffmaterial herstellen, wenn der Einfluß des Luftspalts verringert ist und insbesondere ein Rotor magnetfelderzeugend ist, d. h. permanentmagnetisch an einen Stator koppelt und für eine elektronische Kommutierung gesorgt wird.

Wenn für eine Verdrehsicherung gesorgt wird, dann braucht grundsätzlich keine Bohrung mehr vorgesehen werden, so daß die erforderlichen Bearbeitungsschritte für die Herstellung einer Bohrung wegfallen. Im Zusammenhang mit einem Kunststoffmaterial läßt sich eine Verdrehsicherung auf einfache Weise realisieren.

Der Halter ist insbesondere aus einem thermoplastischen Kunststoffmaterial wie beispielsweise PPS hergestellt. Über ein solches Material läßt sich auch auf einfache Weise eine Flüssigkeits-Abdichtung des Stators gegenüber dem Luftspalt erreichen.

Erfindungsgemäß ist die Lagerschale mit dem Rotor verbunden, so daß mittels des sphärischen Lagers der Rotor auf dem Lagerkörper rotieren kann.

Es ist vorgesehen, daß der Halter mit einem Lagergehäuse des Lagers verbunden ist. Dadurch wird eine drehfeste Fixierung des Halters erreicht.

Günstigerweise ist der Halter integral mit einer Wand verbunden, welche dem Rotor zugewandt ist. Dadurch läßt sich eine entsprechend große Baueinheit des Elektromotors mit einem sphärischen Lager integral herstellen.

Der Lagerkörper ist vorzugsweise aus einem Hartmaterial und insbesondere einem Keramikmaterial hergestellt. Der Lagerkörper weist dann eine sehr hohe Abriebfestigkeit auf, wodurch wiederum die Lebensdauer des sphärischen Lagers erhöht ist.

Es kann vorgesehen sein, daß der Halter in seiner Formgestaltung an die Formgestaltung des Lagerkörpers angepaßt ist. Es wird dann ein Lagerbett bereitgestellt, welches den Lagerkörper aufnimmt und dabei diesen so hält, daß auf einfache Weise eine Verdrehsicherung realisierbar ist.

Erfindungsgemäß ist der Lagerkörper in den Halter eingespritzt. Dadurch ist zum einen die Lagermontage erleichtert, da kein zusätzlicher Schritt der Lagerkörperbefestigung vorgesehen werden muß. Über das Einspritzen läßt sich auch auf einfache Weise eine Verdrehsicherung des Lagerkörpers an dem Halter erreichen, indem beispielsweise der Lagerkörper Ausnehmungen aufweist, in die dann Material des Halters eintauchen kann.

Insbesondere weist der Lagerkörper eine oder mehrere Ausnehmungen auf, in welche Halteelemente eingreifen. Über diese Ausnehmungen mit eingreifenden Halteelementen (des Halters) ist dann für eine drehfeste Fixierung der Lagerkugel an dem Halter gesorgt.

Ganz besonders vorteilhaft ist es, wenn die mindestens eine Ausnehmung des Lagerkörpers und das Halteelement so aneinander angepaßt ausgebildet sind, daß bei maximalem Abstand zwischen Lagerkörper und Halter das Halteelement nicht vollständig aus der zugeordneten Ausnehmung austauchen kann. Wenn über eine Ausnehmung-Halteelement-Kombination nur eine Verdrehsicherung bereitgestellt ist, dann kann das grundsätzliche Problem auftreten, daß der Lagerkörper in axialer Richtung von dem Halter abhebt. Dies kann beispielsweise durch mechanische Erschütterungen verursacht sein oder durch eine entsprechende Anordnung des sphärischen Lagers während dessen Transport. Bei der erwähnten angepaßten Ausbildung von Halteelement und Ausnehmung ist sichergestellt, daß der Lagerkörper nicht vollständig "ausfädeln" kann, d. h. sich nicht vollständig von dem Halter lösen kann. Die Position des Lagerkörpers, bei welcher dieser auf den Halter gedrückt ist, läßt sich dann jederzeit wieder ohne äußeren Bedienereingriff erreichen.

Ganz besonders vorteilhaft ist es, wenn die mindestens eine Ausnehmung so angeordnet ist, daß sie an dem Lagerkörper durch Bearbeitungsvorgänge mit niedriger Winkelgeschwindigkeit herstellbar ist. Insbesondere ist die Ausnehmung so angeordnet, daß sie durch Schleifen herstellbar ist. Beim Schleifen lassen sich relativ große Schleifscheiben einsetzen, bei denen sich mit relativ niedriger Winkelgeschwindigkeit eine hohe Umfangsgeschwindigkeit für die Bearbeitung erzielen läßt. Die Herstellung einer Ausnehmung ist dadurch gegenüber der Herstellung einer Bohrung stark vereinfacht.

Insbesondere ist die mindestens eine Ausnehmung so angeordnet und ausgebildet, daß sie ohne Bohren herstellbar ist.

Es kann vorgesehen sein, daß der Lagerkörper mindestens ein Halteelement aufweist, welches in eine zugeordnete Halteausnehmung des Halters eintaucht. Ein solches Halteelement läßt sich beispielsweise dadurch herstellen, daß auf gegenüberliegenden Seiten des Lagerkörpers Ausnehmungen eingebracht werden und das Halteelement dann als Art Mittelsteg resultiert. Über das Eintauchen in eine Ausnehmung des Halters ist dann eine Verdrehsicherung bereitgestellt. Die Ausnehmung am Halter kann auch integral beispielsweise in einem Spritzgießverfahren mit positioniertem Lagerkörper hergestellt werden.

Es kann vorgesehen sein, daß das mindestens eine Halteelement so ausgebildet ist, daß bei Eintauchen in die zugeordnete Halteausnehmung ein Hinterschnitt vorliegt. Dadurch wird ein besonders sicheres Halten ermöglicht. Insbesondere ist ein Abheben des Lagerkörpers vom Halter beispielsweise aufgrund mechanischer Erschütterungen verhindert.

Bei einer weiteren Ausführungsform weist der Lagerkörper mindestens eine bezogen auf eine Drehachse schräge Ausnehmung auf. Die Ausnehmung ist dabei vorzugsweise nutenförmig ausgebildet. Dadurch läßt sich der Lagerkörper formschlüssig in der Art eines Gewindes an dem Halter halten, so daß hier wiederum eine Verdrehsicherung bereitgestellt ist. Es ist dabei insbesondere eine Mehrzahl von schrägen Ausnehmungen vorgesehen, welche beabstandet zueinander angeordnet sind, um so über einen größeren Bereich eine Fixierung zwischen Halter und Lagerkörper zu erreichen.

Günstigerweise ist der Lagerkörper nicht klemmend an dem Halter fixiert, d. h. der Halter übt keine Klemmkraft auf den Lagerkörper aus. Dadurch wiederum lassen sich auch "weichere" Kunststoffmaterialien für den Halter verwenden.

Insbesondere umfaßt die Oberfläche des Lagerkörpers, auf welchem die Lagerschale gleitbar ist, mindestens eine Halbkugel. Dadurch läßt sich eine Gleitfläche mindestens bis zu einer Äquatorebene bereitstellen.

Es kann vorgesehen sein, daß der Lagerkörper mittels einer Kugel gebildet ist. Die Kugel kann bearbeitet werden, indem entsprechende Ausnehmungen insbesondere durch Schleifen hergestellt werden.

Es ist aber auch grundsätzlich möglich, daß der Lagerkörper mittels eines Kugelabschnitts gebildet ist, welcher mindestens eine Halbkugel ist.

Insbesondere ist der Halter integral mit einer Wand verbunden, welche einen Luftspalt zwischen Rotor und Stator begrenzt.

Es kann dabei vorgesehen sein, daß der Elektromotor bezüglich seiner magnetischen Anordnung so ausgebildet ist, daß in jedem Betriebs- und Nichtbetriebszustand die Lagerschale auf den Lagerkörper gedrückt ist. Es muß dann nur noch für eine Verdrehsicherung für den Lagerkörper gesorgt werden. Eine entsprechende Lagerkugel läßt sich dann auf herstellungstechnisch einfache Weise an dem zugeordneten Halter fixieren.

Es ist günstig, wenn der Rotor magnetfelderzeugend ausgebildet ist und dabei eine elektronische Kommutierung erfolgt. Der Einfluß des Luftspalts auf die Eigenschaften des Elektromotors ist dann verringert.

Der erfindungsgemäße Elektromotor läßt sich auf vorteilhafte Weise in einer Umwälzpumpe einsetzen. Die geförderte Flüssigkeit und insbesondere Wasser läßt sich dabei auch zur Schmierung des sphärischen Lagers einsetzen. Über den Luftspalt wird die Flüssigkeit durch einen Innenbereich zwischen der Lagerschale und dem Lagerkörper geführt, um für die Flüssigkeitsschmierung zu sorgen.

Die nachfolgende Beschreibung bevorzugter Ausführungsformen dient im Zusammenhang mit der Zeichnung der näheren Erläuterung der Erfindung. Es zeigen:
- Figur 1: eine schematische Teildarstellung eines Ausführungsbeispiels einer erfindungsgemäßen Umwälzpumpe;
- Figur 2: eine schematische Darstellung eines ersten Ausführungsbeispiels eines sphärischen Lagers;
- Figur 3: eine schematische Darstellung eines zweiten Ausführungsbeispiels eines sphärischen Lagers;
- Figur 4: eine schematische Darstellung eines dritten Ausführungsbeispiels eines sphärischen Lagers;
- Figur 5: eine schematische Darstellung eines vierten Ausführungsbeispiels eines sphärischen Lagers;
- Figur 6: eine schematische Darstellung eines fünften Ausführungsbeispiels eines sphärischen Lagers;
- Figur 7(a): eine Ansicht auf einen getrennten Lagerkörper für das sphärische Lager gemäß Figur 7(b);
- Figur 7(b): eine schematische Darstellung eines sechsten Ausführungsbeispiels eines sphärischen Lagers;
- Figur 8: eine schematische Darstellung eines siebten Ausführungsbeispiels eines sphärischen Lagers;
- Figur 9: eine schematische Darstellung eines achten Ausführungsbeispiels eines sphärischen Lagers;
- Figur 10(a): eine Ansicht auf einen getrennten Lagerkörper für das sphärische Lager gemäß Figur 10(b) und
- Figur 10(b): eine schematische Darstellung eines neunten Ausführungsbeispiels eines sphärischen Lagers.

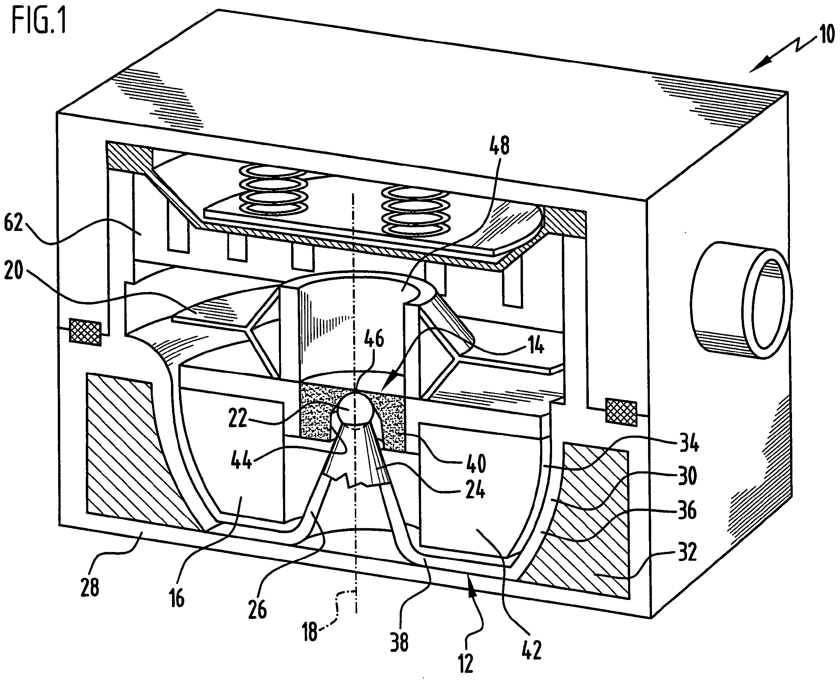

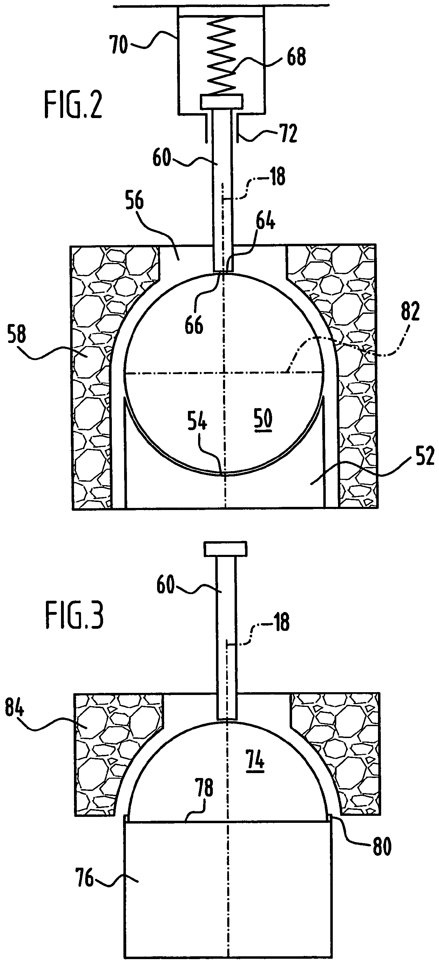

Die in den Figuren 2 bis 10 dargestellten sphärischen Lager für die in Figur 1 dargestellten Umwälzpumpe sind nur zum Teil in Einklang mit dem in dem unabhängigen Anspruch 1 definierten Elektromotor.

Ein Ausführungsbeispiel einer Umwälzpumpe, welche in Figur 1 als Ganzes mit 10 bezeichnet ist, umfaßt einen als Ganzes mit 12 bezeichneten Elektromotor. Dieser Elektromotor 12 wiederum umfaßt ein als Ganzes mit 14 bezeichnetes sphärisches Lager, wobei ein Rotor 16 des Elektromotors 12 mittels des sphärischen Lagers 14 um eine Drehachse 18 drehbar gelagert ist. Ein Laufrad 20 der Umwälzpumpe 10 ist drehfest mit dem Rotor 16 verbunden.

Das sphärische Lager 14 umfaßt einen Lagerkörper 22 mit einer konvexen sphärischen Oberfläche. Der Lagerkörper 22 kann mittels einer Kugel gebildet sein oder einem Kugelabschnitt wie beispielsweise einer Halbkugel. Der Lagerkörper 22 ist aus einem Hartmaterial und insbesondere einem keramischen Material hergestellt.

Der Lagerkörper 22 sitzt drehfest auf einem Halter 24. Der Halter 24 ist insbesondere Teil einer Lagersäule 26 bzw. als Lagersäule ausgebildet. Die Lagersäule 26 wiederum sitzt drehfest bezüglich eines Gehäuses 28 der Umwälzpumpe 10. Das Gehäuse 28 ist ein Lagergehäuse für das sphärische Lager 14.

Der Halter 24 ist aus einem Kunststoffmaterial und insbesondere thermoplastischen Kunststoffmaterial hergestellt. Ein Beispielmaterial ist PPS. Die Lagersäule 26 ist mit einer Wand 30 verbunden und insbesondere integral mit dieser Wand 30 gebildet, welche einen Stator 32 des Elektromotors zu einem Luftspalt 34 hin begrenzt. Die Wand 30 sorgt auch für eine Flüssigkeits-abdichtung gegenüber dem Stator 32.

Die Wand 30 weist einen Bereich 36 auf, in welchem die Wand dem Rotor 16 zugewandt eine (konkave) sphärische Oberfläche hat. Es kann vorgesehen sein, daß sich an diesen Bereich 36 zu der Lagersäule 26 hin ein Bereich 38 anschließt, in dem die Wand 30 im wesentlichen eben ausgebildet ist mit einer Flächennormalen im wesentlichen parallel zur Drehachse 18. Der Luftspalt 34 ist im Bereich 36 sphärisch ausgebildet, d. h. hat die Form eines Kugelschalenabschnitts.

Als Gegenstück zu dem Lagerkörper 22, welcher eine konvexe sphärische Oberfläche aufweist, ist eine Lagerschale 40 vorgesehen, die dem Lagerkörper 22 zugewandt eine konkave sphärische Oberfläche hat. Die Lagerschale 40 ist beispielsweise aus Kohle hergestellt. Sie ist auf dem Lagerkörper 22 gelagert und gleitet auf diesem. Die Lagerschale 40 wiederum ist drehfest mit dem Rotor 16 verbunden.

Bei dem gezeigten Ausführungsbeispiel ist der Rotor 16 magnetfelderzeugend. Er umfaßt dazu eine Mehrzahl von Permanentmagneten 42. Dem sphärischen Bereich 36 der Wand 30 zugewandt ist der Rotor 16 ebenfalls sphärisch ausgebildet, so daß zwischen Rotor 16 und Stator 32 ein kugelschalenförmiger Luftspalt 34 gebildet ist. Der Rotor 16 weist eine Trennwand auf, welche für eine Abdichtung zu dem Luftspalt 34 hin sorgt.

Ein Innenbereich 44 der Lagerschale 40, in welchem der Lagerkörper 22 liegt, ist mit dem Luftspalt 34 fluidwirksam verbunden. (Auch mindestens ein Teil des Halters 24 kann in diesem Innenbereich 44 liegen.) Dadurch kann Flüssigkeit über den Luftspalt 34 in den Innenbereich 44 strömen und dadurch eine Lagerschmierung bereitstellen. In der Lagerschale 40 ist eine Schmieröffnung 46 vorgesehen, über die dann die Flüssigkeit aus dem Innenbereich 44 abführbar ist.

Die Schmieröffnung 46 ist in einem zentralen (bezogen auf die Drehachse 18) materialfreien Bereich der Lagerschale 40 gebildet. Dieser zentrale materialfreie Bereich ist wiederum vorzugsweise so ausgebildet, daß ein Kraftvektor der resultierenden Gesamtkraft auf den materialfreien Bereich trifft, wenn der Rotor 16 bezüglich des Stators 32 unsymmetrisch ist. Ein solcher Elektromotor ist in der DE 102 45 016 A1 beschrieben.

Die Schmieröffnung 46 steht in Verbindung mit einer Saugseite 48 der Umwälzpumpe 10.

Der Lagerkörper 22 ist erfindungsgemäß an dem Halter 24 drehfest gehalten, wobei eine Verdrehsicherung vorgesehen ist. Der Lagerkörper 22 ist dabei nicht-klemmend gehalten; aufgrund der Ausbildung des Halters 24 mittels eines Kunststoffmaterials lassen sich im Gegensatz beispielsweise zu einem Halter aus einem metallischen Material nur begrenzte Klemmkräfte ausüben.

Bei einem ersten, nicht erfindungsgemäßen Ausführungsbeispiel, welches in Figur 2 gezeigt ist, sitzt eine Lagerkugel 50 als Lagerkörper auf einem Halter 52, welcher eine kugelschalenförmige Stirnseite 54 aufweist. Diese Stirnseite 54 kann mit einer Antirutscheinrichtung versehen sein wie beispielsweise einem Antirutschbelag. Die Antirutscheinrichtung kann alternativ oder zusätzlich mittels des Lagerkörpers 50 gebildet sein. Beispielsweise ist seine der Stirnseite 54 des Halters 52 zugewandte Oberfläche mindestens teilweise aufgerauht. Der Antirutschbelag kann beispielsweise mittels eines Gummibelags gebildet sein. Die Aufrauhung kann beispielsweise durch Sandstrahlen des Lagerkörpers 50 hergestellt sein. Durch die Antirutscheinrichtung wird der Reibungskoeffizient zwischen Lagerkugel 50 und Halter 52 erhöht. Der Reibungskoeffizient wird so eingestellt, daß die Reibungskraft zwischen Lagerkörper 50 und Halter 52 größer ist als die Reibungskraft zwischen Lagerkörper 50 und Lagerschale 40.

Durch eine Schmieröffnung 56 in einer Lagerschale 58 ist ein Stempel 60 geführt, welcher im wesentlichen koaxial zu der Drehachse 18 liegt (für die Drehachse wird das gleiche Bezugszeichen wie in Figur 1 verwendet). Der Stempel 60 ist mit dem Lagergehäuse 28 verbunden. Der Stempel 60 sitzt drehfest bezüglich des Lagergehäuses 28. Er ist dazu beispielsweise mit einer Gehäusewand wie der Gehäusewand 62 (Figur 1) verbunden.

Der Stempel 60 wirkt auf einen Oberflächenbereich 64 der Lagerkugel 50, wobei dieser Oberflächenbereich 64 koaxial zur Drehachse 18 liegt. Ein stirnseitiges Ende 66 des Stempels 60 ist entsprechend an die sphärische Oberfläche der Lagerkugel 50 angepaßt. Über den Stempel 60 wird die Lagerkugel 50 in die Stirnseite 54 des Halters 52 als Lagerbett für die Lagerkugel 50 gedrückt und damit die Normalkraft der Lagerkugel 50 auf den Halter 52 erhöht. Dies erhöht die Reibungskraft zwischen Lagerkugel 50 und Halter 52. Dadurch wird die Lagerkugel 50 drehfest an dem Halter 52 gehalten. Das Halten der Lagerkugel 50 an dem Halter 52 ist dabei unabhängig von der axialen Stellung der Lagerschale 40 (bezogen auf die Drehachse 18), d. h. auch wenn der mit der Lagerschale 58 verbundene Rotor abhebt, bleibt die Lagerkugel 50 in ihrer drehfesten Lage am Halter 52. Mittels des Stempels 60 ist somit eine Verdrehsicherung für die Lagerkugel 50 gebildet; die Lagerkugel 50 ist an dem Halter 52 gehalten, ohne daß die Lagerkugel selber weiterbearbeitet werden muß. Insbesondere muß keine Bohrung in die Lagerkugel 50 eingebracht werden. Eine solche Bohrung in ein Hartmaterial und insbesondere keramisches Material einzubringen, erfordert einen verhältnismäßig großen Aufwand und ist deshalb entsprechend kostenintensiv. Beispielsweise muß ein Diamantbohrer verwendet werden, um eine solche Bohrung einzubringen.

Es kann vorgesehen sein, daß der Stempel 60 über ein elastisches Element 68 und insbesondere eine Druckfeder mit dem Lagergehäuse 28 verbunden ist.

Das elastische Element 68 ist dabei so angeordnet und ausgebildet und insbesondere so vorgespannt, daß es eine Kraft auf den Stempel 60 in Richtung des Halters 52 ausübt, um so die Lagerkugel 50 in ihr Lagerbett 54 zu drücken.

Das elastische Element 68 ist beispielsweise in einem Gehäuse 70 angeordnet. Das Gehäuse wiederum ist als Lager 72 ausgebildet, an welchem der Stempel 60 in axialer Richtung (koaxial zur Drehachse 18) verschieblich geführt ist. Der Stempel 60 ist dadurch nicht starr an dem Lagergehäuse 28 gehalten, sondern ist eben beweglich gehalten. Dadurch ist eine Wärmeausdehnungskompensation ermöglicht. Ist der Stempel 60 aus einem metallischen Material gebildet, dann weist er eine stärkere Wärmeausdehnung auf, als eine keramische Lagerkugel 50. Bei einem starr eingespannten Stempel 60 würde dies bedeuten, daß er eine größere Kraft auf die Lagerkugel 50 und damit auf den Halter 52 ausübt. Durch eine elastische Aufhängung des Stempels 60 (über das elastische Element 68) kann der Stempel 60 hier ausweichen, indem das elastische Element 68 etwas zusammengedrückt wird.

Bei einem ähnlichen, nicht erfindungsgemäßen Ausführungsbeispiel, welches in Figur 3 angedeutet ist, sitzt ein Lagerkörper 74 auf einem Halter 76 aus einem Kunststoffmaterial. Der Lagerkörper 74 ist mittels einer Halbkugel aus einem keramischen Material gebildet. Ein Lagerbett 78 ist an dem Halter 76 gebildet. Es ist dabei eine Querhalterung 80, beispielsweise in Form eines umlaufenden Rands, vorgesehen, die verhindert, daß der Lagerkörper 74 seitlich von dem Halter 76 abrutschen kann.

Der Stempel 60 ist grundsätzlich gleich wie oben ausgebildet und es werden deshalb auch gleiche Bezugszeichen verwendet.

Bei dem in Figur 2 gezeigten Ausführungsbeispiel reicht die Lagerschale 58 über eine Äquatorebene 82 der Lagerkugel 50 hinaus. Bei dem in Figur 3 gezeigten Ausführungsbeispiel reicht die entsprechende Lagerschale 84 nur bis zur Äquatorialebene.

Wie oben erwähnt, läßt sich bei der Stempellösung gemäß den Figuren 2 und 3 der entsprechende Lagerkörper an dem zugeordneten Halter drehfest halten, ohne daß eine Bohrung vorgesehen werden muß. Diese Halterung ist auch dann erreicht, wenn die Lagerschale selber nicht auf den Lagerkörper drückt und damit den Lagerkörper in sein Lagerbett am Halter drückt. Der Stempel 60 sorgt eben dafür, daß der entsprechende Lagerkörper 50 bzw. 74 in sein Lagerbett gedrückt wird und dort drehfest gehalten ist.

Es ist auch grundsätzlich möglich, daß die Lagerkugel 50 bzw. der Lagerkörper 74 erfindungsgemäß in ihr entsprechendes Lagerbett in dem Halter 52 bzw. 56 eingespritzt sind.

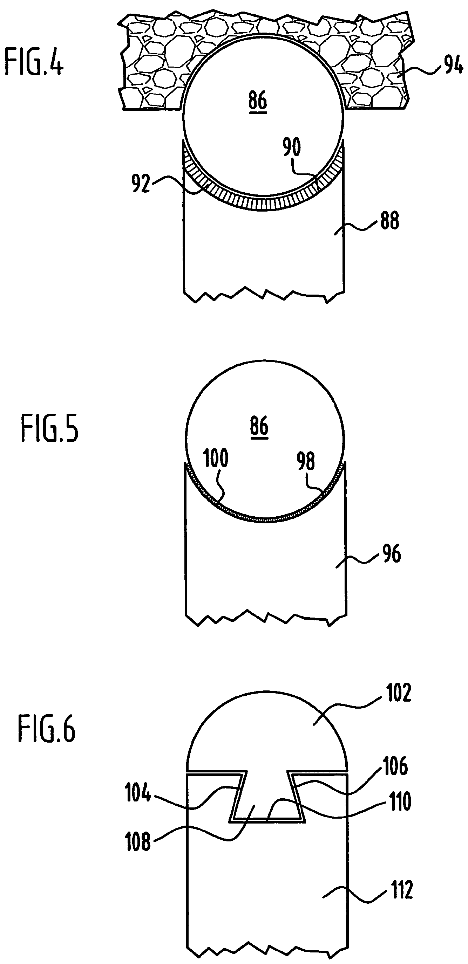

Bei einem dritten, nicht erfindungsgemäßen Ausführungsbeispiel, welches in Figur 4 gezeigt ist, sitzt eine Lagerkugel 86 als Lagerkörper auf einem Halter 88 mit einem sphärischen Lagerbett 90. Das Lagerbett 90 ist mit einem Antirutschbelag 92 wie beispielsweise einem Gummibelag versehen. Dieser Antirutschbelag dient als Antirutscheinrichtung dazu, die Lagerkugel 86 drehfest an dem Halter 88 zu halten. Der Antirutschbelag 92 bildet somit eine Verdrehsicherung für die Lagerkugel 86.

Bei diesem Ausführungsbeispiel ist kein Stempel zum Drücken der Lagerkugel 86 in das Lagerbett 90 vorgesehen. Vielmehr ist der Elektromotor hier so ausgebildet, daß ein mit einer Lagerschale 94 verbundener Rotor nicht abheben kann. Insbesondere wirkt ständig eine solche magnetische Kraft, daß der entsprechende Rotor die Lagerschale 94 auf die Lagerkugel 86 drückt.

Die Lagerkugel 86 wird an dem Halter 88 drehfest gehalten, ohne daß eine Bohrung in der Lagerkugel 86 vorgesehen werden muß.

Bei einer alternativen, nicht erfindungsgemäßen Ausführungsform, welche in Figur 5 schematisch gezeigt ist, ist die Lagerkugel an einer Oberfläche, welche einer Stirnseite 98 des Halters 96 zugewandt ist, aufgerauht, beispielsweise durch Sandstrahlen. Dadurch ist der Reibungskoeffizient für das Gleiten im Lagerbett 100 erhöht, wodurch wiederum eine Antirutscheinrichtung für die Lagerkugel 86 gebildet ist. Ansonsten funktioniert dieses vierte Ausführungsbeispiel gemäß Figur 5 wie das im Zusammenhang mit Figur 4 beschriebene Ausführungsbeispiel.

Bei einem fünften Ausführungsbeispiel, welches in Figur 6 schematisch (ohne Lagerschale) gezeigt ist, ist ein Lagerkörper 102 mittels einer Kugel gebildet, welche gegenüberliegende Ausnehmungen 104, 106 aufweist. Die Ausnehmungen können parallel zueinander angeordnet sein (in der Figur 6 nicht gezeigt) oder so angeordnet sein, daß der Lagerkörper 102 ein trapezförmiges Halteelement 108 aufweist. Wenn das Halteelement 108 in einer zugeordneten Halteausnehmung 110 eines Halters 112 eingetaucht ist, dann läßt sich mit dieser trapezförmigen Ausgestaltung ein Hinterschnitt erreichen, über den wiederum ein sicheres Halten des Lagerkörpers 102 an dem Halter 112 erreicht ist. Der Lagerkörper 102 ist erfindungsgemäß mittels einem Halteelement in dem Halter 112 eingespritzt, so daß die Halteausnehmung 110 während des Herstellungsprozesses des Halters 112 mit eingelegtem Lagerkörper 102 entsteht.

Die Ausnehmungen 104, 106 sind so angeordnet, daß sie durch einen Bearbeitungsvorgang mit kleiner Winkelgeschwindigkeit und insbesondere durch Schleifen herstellbar sind. Um eine Bohrung in einem Lagerkörper 102 aus einem Hartmaterial herzustellen, ist ein Bohrwerkzeug mit entsprechend kleinem Umfang notwendig. Beispielsweise existieren sphärische Lager mit Lagerkörper, die einen Durchmesser von 6 mm aufweisen. Der Durchmesser einer entsprechenden Bohrung müßte dann in der Größenordnung von 1 mm liegen. Damit beim Bohren der Bohrer eine genügende Umfangsgeschwindigkeit hat, muß dieser mit sehr hoher Drehzahl (Winkelgeschwindigkeit) angetrieben werden.

Die Ausnehmungen 104, 106 lassen sich durch Schleifen herstellen. Hier können entsprechend große Schleifscheiben verwendet werden, um bei kleiner Winkelgeschwindigkeit die erforderliche Umfangsgeschwindigkeit zu erreichen. Der Aufwand, um die Ausnehmungen 104, 106 herzustellen, ist erheblich geringer als der für die Herstellung von Bohrungen durch den Lagerkörper 102 hindurch.

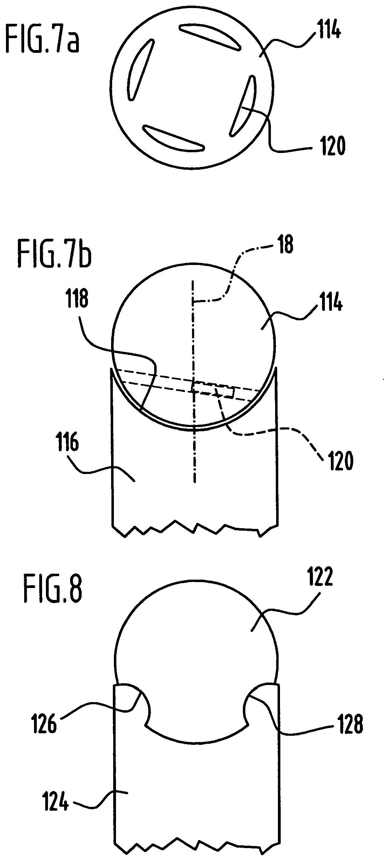

Bei einem sechsten Ausführungsbeispiel, welches in den Figuren 7(a) und 7(b) gezeigt ist, sitzt eine Kugel 114 als Lagerkörper auf einem Halter 116 mit einem Lagerbett 118. Die Kugel 114 weist eine Mehrzahl von Ausnehmungen 120 auf, welche als Nuten ausgebildet sind und entsprechend hergestellt sind. Die Ausnehmungen 120 wiederum liegen schräg zur Drehachse 18. Die Ausnehmungen 120 (in Figur 7(a) ist ein Ausführungsbeispiel mit vier Ausnehmungen 120 gezeigt) sitzen verteilt um eine Kugelachse der Kugel 114. Über die Ausnehmungen 120 läßt sich die Kugel 114 in der Art eines Gewindes auf den Halter 116 aufsetzen bzw. in diesem halten. Es wird dadurch ein guter Formschluß erreicht, um so wiederum eine Verdrehsicherung bereitzustellen.

Erfindungsgemäß ist die Kugel 114 des sechsten Ausführungsbeispiels mit ihren Ausnehmungen 120 in den Halter 112 eingespritzt.

Bei einem siebten Ausführungsbeispiel, welches in Figur 8 gezeigt ist, sitzt ein Lagerkörper 122 auf einem Halter 124. In dem Lagerkörper 122, welcher kugelförmig ist, sind von der Oberfläche her gegenüberliegende rinnenförmige Ausnehmungen 126, 128 gebildet, in welchen Material des Halters 124 eingetaucht ist. Erfindungsgemäß ist der Lagerkörper 122 in den Halter 124 eingespritzt und sitzt so drehsicher auf dem Halter 124.

Bei den Ausführungsbeispielen gemäß den Figuren 6 bis 8 ist eine drehsichere Fixierung der entsprechenden Lagerkörper an dem zugeordneten Halter unabhängig von der Lage des Rotors erreicht. Diese Ausführungsformen sind also für alle Arten von Elektromotoren geeignet, d. h. auch für solche, bei denen der Rotor mit den entsprechenden Lagerschalen abheben kann.

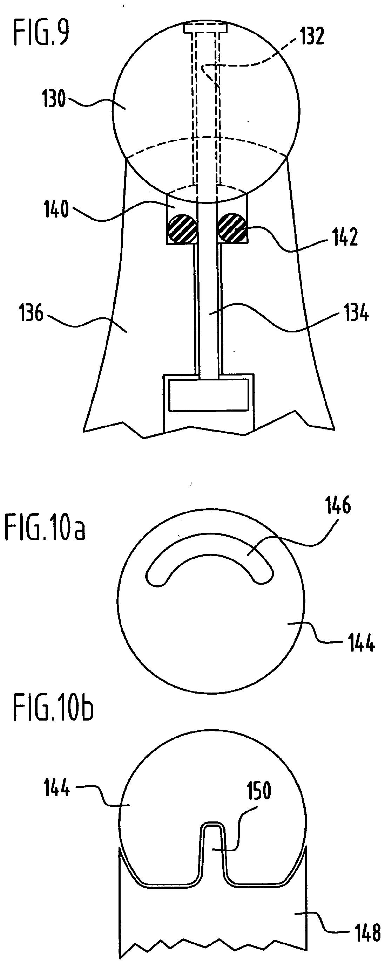

Es ist grundsätzlich auch möglich, wie in Figur 9 anhand eines achten nicht erfindungsgemäßen Ausführungsbeispiels gezeigt, daß ein Lagerkörper 130 eine Bohrung 132 aufweist und über ein Fixierungselement wie eine Schraube 134 der Lagerkörper mit einer Lagersäule 136 als Halter verbunden ist, um so eben den Lagerkörper 130 mit der Lagersäule 136 zu fixieren.

Zusätzlich kann der Lagerkörper 130 eine oder mehrere (nicht abgebildete) Ausnehmungen aufweisen, in denen Material der Lagersäule 136 sitzt. Der Lagerkörper 130 ist erfindungsgemäß in die Lagersäule 136 eingespritzt.

In der Lagersäule 136 ist dem Lagerkörper 130 zugewandt eine Ausnehmung 140 gebildet, durch welche die Schraube 134 geführt ist. In der Ausnehmung 140 sitzt um die Schraube 134 eine Dichtung 142 beispielsweise in der Form eines O-Rings. Diese Dichtung 142 verhindert, daß Flüssigkeit über die Bohrung 132 durch die Ausnehmung für die Schraube 134 durch die Lagersäule 136 strömen kann.

Bei einem neunten nicht erfindungsgemäßen Ausführungsbeispiel, welches in den Figuren 10(a) und 10(b) gezeigt ist, weist ein kugelförmiger Lagerkörper 144 eine Ausnehmung 146 auf. Diese Ausnehmung 146 ist beispielsweise mittels einer Schleifscheibe eingebracht.

Der Lagerkörper 144 sitzt drehfest auf einem Halter 148. Dieser umfaßt ein in axialer Richtung (parallel zur Drehachse 18) aufragendes Halteelement 150, welches in die Ausnehmung 146 eintaucht und dadurch den Lagerkörper 144 drehfest an dem Halter 148 hält. Durch die Kombination zwischen Ausnehmung 146 und angepaßtem Halteelement 150 ist somit eine Verdrehsicherung gebildet.

Die Ausnehmung 146 weist in axialer Richtung (parallel zur Drehachse 18) eine solche Tiefe auf und das Halteelement 150 weist in dieser Richtung eine solche Höhe auf, daß bei maximalem Abstand zwischen dem Lagerkörper 144 und dem Halter 148 das Halteelement 150 nicht aus der Ausnehmung 146 vollständig austauchen kann, d. h. daß zumindest ein Teil des Halteelements 150 stets in die Ausnehmung 146 eingetaucht ist. Dies bedeutet wiederum, daß sich der Lagerkörper 144 nicht vollständig von dem Halter 148 lösen kann und damit "verliersicher" an dem Halter 148 gehalten ist.

Der Lagerkörper 144 kann "lose" auf dem Halter 148 gehalten werden, d. h. es ist "nur" eine Verdrehsicherung bereitgestellt. Wenn während des Transports des entsprechenden Lagers bzw. aufgrund von mechanischen Erschütterungen der Lagerkörper 144 von dem Halter 148 abhebt, dann ist dennoch sichergestellt, daß dieser nicht vollständig abheben und sich lösen kann.

Durch die erfindungsgemäße Lösung, bei der der Lagerkörper 22 auf einem Halter 24 aus einem Kunststoffmaterial sitzt, läßt es sich erreichen, daß die Fixierung des Lagerkörpers 22 an seinem Halter 24 auf einfache und kostengünstige Weise durchführbar ist. Insbesondere läßt es sich vermeiden, daß der Lagerkörper aus einem Hartmaterial durchbohrt werden muß. Es können dann auch Lagerkörper aus besonders harten Materialien wie Siliciumcarbid-Keramiken eingesetzt werden.

Es läßt sich also eine aufwendige Verarbeitung vermeiden, wobei es vorgesehen sein kann, daß der Lagerkörper über Ausnehmungen (vgl. Figuren 6 bis 10) an dem zugeordneten Halter gehalten ist. Solche Ausnehmungen lassen sich aber mit im Vergleich zu Bohrungen niedrigeren Winkelgeschwindigkeiten herstellen.

Es ist dann nicht mehr nötig, den Lagerkörper zu klemmen, so daß eben auch kein metallischer Halter mehr notwendig ist.

Durch die erfindungsgemäße Lösung wird eine drehfeste Lagerkörperbefestigung erreicht, wobei der Lagerkörper mindestens bis zum Äquator benutzbar ist.

Die erfindungsgemäße Lösung läßt sich vorteilhaft einsetzen, wenn ein Rotor mit einer verbundenen Lagerschale magnetfelderzeugend ist, d. h. permanentmagnetisch an einen Stator koppelt. Bei dem Stator wird für eine elektronische Kommutierung gesorgt. Der Luftspalt 34 hat dann einen relativ kleinen Einfluß, so daß wiederum metallische Trennwände für den Luftspalt 34 nicht mehr notwendig sind.

## Patentansprüche

1. Elektromotor (12) mit einem Rotor (16), einem Stator (32) und einem sphärischen Lager (14) umfassend einen Lagerkörper (22; 102; 114; 122; 130) mit einer konvexen sphärischen Oberfläche, einen Halter (24; 112; 116; 124; 136), an dem der Lagerkörper (22; 102; 114; 122; 130) angeordnet ist, und eine Lagerschale (40; 58; 84; 94) mit einer konkaven sphärischen Oberfläche, wobei die Lagerschale (40; 58; 84; 94) auf dem Lagerkörper (22; 102; 114; 122; 130) drehbar gelagert ist und die Lagerschale (40; 58; 84; 94) mit dem Rotor (16) verbunden ist,
**dadurch gekennzeichnet, dass** der Halter (24; 112; 116; 124; 136) aus einem Kunststoffmaterial hergestellt ist und dass der Lagerkörper (22; 102; 114; 122; 133) in den Halter (24; 112; 116; 124; 136) zur Ausbildung einer Verdrehsicherung (106; 120; 126, 128) eingespritzt ist, wobei die Verdrehsicherung (106; 120; 126, 128) den Lagerkörper (22; 102; 114; 122; 130) drehfest am Halter (24; 112; 116; 124; 136) hält.

2. Elektromotor (12) nach Anspruch 1, **dadurch gekennzeichnet, dass** der Halter (24; 112; 116; 124; 136) aus einem thermoplastischen Kunststoffmaterial hergestellt ist.

3. Elektromotor (12) nach einem der vorangehenden Ansprüche, **dadurch gekennzeichnet, dass** der Halter (24) mit einem Lagergehäuse (28) des Lagers verbunden ist.

4. Elektromotor (12) nach einem der vorangehenden Ansprüche, **dadurch gekennzeichnet, dass** der Halter (24) integral mit einer Wand (30) verbunden ist, welche dem Rotor (16) zugewandt ist.

5. Elektromotor (12) nach einem der vorangehenden Ansprüche, **dadurch gekennzeichnet, dass** der Lagerkörper (22) aus einem Hartmaterial hergestellt ist.

6. Elektromotor (12) nach einem der vorangehenden Ansprüche, **dadurch gekennzeichnet, dass** der Halter (24) in seiner Formgestaltung an die Formgestaltung des Lagerkörpers (22) angepaßt ist.

7. Elektromotor (12) nach einem der vorangehenden Ansprüche, **dadurch gekennzeichnet, dass** der Lagerkörper (102; 114; 122; 130; 144) eine oder mehrere Ausnehmungen (104, 106; 120; 126, 128; 146) aufweist, in welche Halteelemente (108; 150) eingreifen.

8. Elektromotor (12) nach Anspruch 12, **dadurch gekennzeichnet, dass** die mindestens eine Ausnehmung (146) des Lagerkörpers (144) und das Halteelement (150) so aneinander angepaßt ausgebildet sind, daß bei maximalem Abstand zwischen Lagerkörper (144) und Halter (148) das Halteelement (150) nicht vollständig aus der zugeordneten Ausnehmung (146) austauchen kann.

9. Elektromotor (12) nach einem der vorangehenden Ansprüche, **dadurch gekennzeichnet, dass** die mindestens eine Ausnehmung (104, 106; 120; 126, 128) so angeordnet ist, daß sie an dem Lagerkörper (102; 114; 122; 130) durch Bearbeitungsvorgänge mit niedriger Winkelgeschwindigkeit herstellbar ist.

10. Elektromotor (12) nach Anspruch 9, **dadurch gekennzeichnet, dass** die mindestens eine Ausnehmung (104, 106; 120; 126, 128) durch Schleifen herstellbar ist.

11. Elektromotor (12) nach einem der Ansprüche 7 bis 10, **dadurch gekennzeichnet, dass** die mindestens eine Ausnehmung so angeordnet und ausgebildet ist, daß sie ohne Bohren herstellbar ist.

12. Elektromotor (12) nach einem der vorangehenden Ansprüche, **dadurch gekennzeichnet, dass** der Lagerkörper (102) mindestens ein Halteelement (108) aufweist, welches in eine zugeordnete Halteausnehmung (110) des Halters (112) eintaucht.

13. Elektromotor (12) nach Anspruch 12, **dadurch gekennzeichnet, dass** das mindestens eine Halteelement (108) so ausgebildet ist, daß beim Eintauchen in die zugeordnete Halteausnehmung (110) ein Hinterschnitt vorliegt.

14. Elektromotor (12) nach einem der vorangehenden Ansprüche, **dadurch gekennzeichnet, dass** der Lagerkörper (114) mindestens eine bezogen auf eine Drehachse (18) schräge Ausnehmung (120) aufweist.

15. Elektromotor (12) nach Anspruch 14, **dadurch gekennzeichnet, dass** der Lagerkörper (114) eine Mehrzahl von schrägen Ausnehmungen (120) aufweist, welche beabstandet zueinander angeordnet sind.

16. Elektromotor (12) nach einem der vorangehenden Ansprüche, **dadurch gekennzeichnet, dass** der Lagerkörper (22; 102; 114; 122; 130) nicht-klemmend an dem Halter (24; 112; 116; 124; 136) fixiert ist.

17. Elektromotor (12) nach einem der vorangehenden Ansprüche, **dadurch gekennzeichnet, dass** der Lagerkörper (22; 102; 114; 122; 130) mittels einer Kugel gebildet ist.

18. Elektromotor (12) nach einem der vorangehenden Ansprüche, **dadurch gekennzeichnet, dass** der Lagerkörper mittels eines Kugelabschnitts gebildet ist, welcher mindestens eine Halbkugel ist.

19. Elektromotor (12) nach einem der vorangehenden Ansprüche, **dadurch gekennzeichnet, dass** der Halter (24) integral mit einer Wand (30) verbunden ist, welche einen Luftspalt (34) zwischen Rotor (16) und Stator (32) begrenzt.

20. Elektromotor (12) nach einem der vorangehenden Ansprüche, **dadurch gekennzeichnet, dass** in jedem Betriebs- und Nichtbetriebsmodus die Lagerschale auf den Lagerkörper gedrückt ist.

21. Elektromotor (12) nach einem der vorangehenden Ansprüche, **dadurch gekennzeichnet, dass** der Rotor (16) magnetfelderzeugend ausgebildet ist.

22. Verwendung des Elektromotors (12) gemäß einem der Ansprüche 1 bis 21 in einer Umwälzpumpe (10).

23. Umwälzpumpe (10), welche mit einem Elektromotor (12) gemäß einem der Ansprüche 1 bis 21 versehen ist.

## Claims

1. An electric motor (12) with a rotor (16), a stator (32) and a spherical bearing (14) comprising a bearing body (22; 102; 114; 122; 130) with a convex spherical surface, a holder (24; 112; 116; 124; 136) on which the bearing body (22; 102; 114; 122; 130) is arranged, and a bearing shell (40; 58; 84; 94) with a concave spherical surface, wherein the bearing shell (40; 58; 84; 94) is rotatably mounted on the bearing body (22; 102; 114; 122; 130) and the bearing shell (40; 58; 84; 94) is connected to the rotor (16) **characterised in that** the holder (24; 112; 116; 124; 136) is made of a plastic material and **in that** the bearing body (22; 102; 114; 122; 133) is injected into the holder (24; 112; 116; 124; 136) to form an anti-rotation device (106; 120; 126, 128), with the anti-rotation device (106; 120; 126, 128) holding the bearing body (22; 102; 114; 122; 130) non-rotatably secured to the holder (24; 112; 116; 124; 136).

2. An electric motor (12) according to claim 1, **characterised in that** the holder (24; 112; 116; 124; 136) is made of a thermoplastic material.

3. An electric motor (12) according to one of the preceding claims, **characterised in that** the holder (24) is connected to a bearing housing (28) of the bearing.

4. An electric motor (12) according to one of the preceding claims, **characterised in that** the holder (24) is integrally connected to a wall (30) facing the rotor (16).

5. An electric motor (12) according to one of the preceding claims, **characterised in that** the bearing body (22) is made of a hard material.

6. An electric motor (12) according to one of the preceding claims, **characterised in that** the holder (24) is adapted in its shape to the shape of the bearing body (22).

7. An electric motor (12) according to one of the preceding claims, **characterised in that** the bearing body (102; 114; 122; 130; 144) has one or more recesses (104, 106; 120; 126, 128; 146) in which holding elements (108; 150) engage.

8. An electric motor (12) according to Claim 12, **characterised in that** the at least one recess (146) of the bearing body (144) and the holding element (150) are matched to one another such that at a maximum distance between the bearing body (144) and the holder (148), the holding element (150) cannot completely emerge from the associated recess (146).

9. An electric motor (12) according to one of the preceding claims, **characterised in that** the at least one recess (104, 106; 120; 126, 128) is arranged such that it can be produced on the bearing body (102; 114; 122; 130) by machining operations at low angular speed.

10. An electric motor (12) according to claim 9, **characterised in that** the at least one recess (104, 106; 120; 126, 128) can be produced by grinding.

11. An electric motor (12) according to one of claims 7 to 10, **characterised in that** the at least one recess is arranged and designed in such a way that it can be produced without drilling.

12. An electric motor (12) according to one of the preceding claims, **characterised in that** the bearing body (102) has at least one holding element (108) which inserts into an associated holding recess (110) of the holder (112).

13. An electric motor (12) according to claim 12, **characterised in that** the at least one holding element (108) is designed in such a way that an undercut is present when it is inserted in the associated holding recess (110).

14. An electric motor (12) according to one of the preceding claims, **characterised in that** the bearing body (114) has at least one recess (120) which is oblique with respect to an axis of rotation (18).

15. An electric motor (12) according to claim 14, **characterised in that** the bearing body (114) comprises a plurality of oblique recesses (120) spaced apart from each other.

16. An electric motor (12) according to one of the preceding claims, **characterised in that** the bearing body (22; 102; 114; 122; 130) is non-clampingly fixed to the holder (24; 112; 116; 124; 136).

17. An electric motor (12) according to one of the preceding claims, **characterised in that** the bearing body (22; 102; 114; 122; 130) is formed by means of a sphere.

18. An electric motor (12) according to one of the preceding claims, **characterised in that** the bearing body is formed by means of a spherical segment which is at least one hemisphere.

19. An electric motor (12) according to one of the preceding claims, **characterised in that** the holder (24) is integrally connected to a wall (30) delimiting an air gap (34) between the rotor (16) and the stator (32).

20. An electric motor (12) according to one of the preceding claims, **characterised in that** in each operating mode and non-operating mode the bearing shell is pressed onto the bearing body.

21. An electric motor (12) according to one of the preceding claims, **characterised in that** the rotor (16) is designed to generate a magnetic field.

22. Use of the electric motor (12) according to any one of claims 1 to 21 in a circulating pump (10).

23. A circulating pump (10) provided with an electric motor (12) in accordance with any one of claims 1 to 21.

## Revendications

1. Moteur électrique (12) avec un rotor (16), un stator (32) et un palier sphérique (14) comportant un corps de palier (22 ; 102 ; 114 ; 122 ; 130) avec une surface sphérique convexe, un support (24 ; 112 ; 116 ; 124 ; 136) sur lequel est agencé le corps de palier (22 ; 102 ; 114 ; 122 ; 130), et un coussinet de palier (40 ; 58 ; 84 ; 94) avec une surface sphérique concave, le coussinet de palier (40 ; 58 ; 84 ; 94) étant agencé en rotation sur le corps de palier (22 ; 102 ; 114 ; 122 ; 130) et le coussinet de palier (40 ; 58 ; 84 ; 94) étant relié au rotor (16),
**caractérisé en ce que** le support (24 ; 112 ; 116 ; 124 ; 136) est fabriqué à partir d'un matériau synthétique et **en ce que** le corps de palier (22 ; 102 ; 114 ; 122 ; 133) est injecté dans le support (24 ; 112 ; 116 ; 124 ; 136) pour la formation d'un dispositif anti-rotation (106 ; 120 ; 126 ; 128), le dispositif anti-rotation (106 ; 120 ; 126 ; 128) maintenant le corps de palier (22 ; 102 ; 114 ; 122 ; 130) bloqué en rotation sur le support (24; 112; 116; 124; 136).

2. Moteur électrique (12) selon la revendication 1, **caractérisé en ce que** le support (24 ; 112 ; 116 ; 124 ; 136) est fabriqué à partir d'un matériau synthétique thermoplastique.

3. Moteur électrique (12) selon l'une des revendications précédentes, **caractérisé en ce que** le support (24) est relié à un logement de palier (28) du palier.

4. Moteur électrique (12) selon l'une des revendications précédentes, **caractérisé en ce que** le support (24) est relié intégralement à une paroi (30) qui est tournée vers le rotor (16).

5. Moteur électrique (12) selon l'une des revendications précédentes, **caractérisé en ce que** le corps de palier (22) est fabriqué à partir d'un matériau dur.

6. Moteur électrique (12) selon l'une des revendications précédentes, **caractérisé en ce que** le support (24) est adapté, dans sa forme, à la forme du corps de palier (22).

7. Moteur électrique (12) selon l'une des revendications précédentes, **caractérisé en ce que** le corps de palier (102 ; 114 ; 122 ; 130 ; 144) présente un ou plusieurs évidements (104 ; 106 ; 120 ; 126 ; 128 ; 146) dans lesquels s'engagent des éléments de maintien (108 ; 150).

8. Moteur électrique (12) selon la revendication 12, **caractérisé en ce que** le au moins un évidement (146) du corps de palier (144) et l'élément de maintien (150) sont conçus de manière à être adaptés l'un à l'autre afin que l'élément de maintien (150) ne puisse sortir complètement hors de l'évidement (146) associé lors d'une distance maximale entre le corps de palier (144) et le support (148).

9. Moteur électrique (12) selon l'une des revendications précédentes, **caractérisé en ce que** le au moins un évidement (104 ; 106 ; 120 ; 126 ; 128) est agencé de telle manière qu'il peut être fabriqué sur le corps de palier (102 ; 114 ; 122 ; 130) par des opérations d'usinage avec une faible vitesse angulaire.

10. Moteur électrique (12) selon la revendication 9, **caractérisé en ce que** le au moins un évidement (104 ; 106 ; 120 ; 126 ; 128) peut être fabriqué par ponçage.

11. Moteur électrique (12) selon l'une des revendications 7 à 10, **caractérisé en ce que** le au moins un évidement est agencé et conçu de telle manière qu'il peut être fabriqué sans perçage.

12. Moteur électrique (12) selon l'une des revendications précédentes, **caractérisé en ce que** le corps de palier (102) présente au moins un élément de maintien (108) qui pénètre dans un évidement de maintien (110) associé du support (112).

13. Moteur électrique (12) selon la revendication 12, **caractérisé en ce que** le au moins un élément de maintien (108) est conçu de telle manière qu'une contre-dépouille est présente lors de la pénétration dans l'évidement de maintien (110) associé.

14. Moteur électrique (12) selon l'une des revendications précédentes, **caractérisé en ce que** le corps de palier (114) présente au moins un évidemment incliné (120) par rapport à un axe de rotation (18).

15. Moteur électrique (12) selon la revendication 14, **caractérisé en ce que** le corps de palier (114) présente une multitude d'évidements inclinés (120) qui sont agencés espacés les uns des autres.

16. Moteur électrique (12) selon l'une des revendications précédentes, **caractérisé en ce que** le corps de palier (22 ; 102 ; 114 ; 122 ; 130) est fixé non serré sur le support (24 ; 112 ; 116 ; 124 ; 136).

17. Moteur électrique (12) selon l'une des revendications précédentes, **caractérisé en ce que** le corps de palier (22 ; 102 ; 114 ; 122 ; 130) est formé à l'aide d'une sphère.

18. Moteur électrique (12) selon l'une des revendications précédentes, **caractérisé en ce que** le corps de palier est formé à l'aide d'une section sphérique qui est au moins une semi-sphère.

19. Moteur électrique (12) selon l'une des revendications précédentes, **caractérisé en ce que** le support (24) est relié intégralement à une paroi (30) qui délimite un entrefer (34) entre rotor (16) et stator (32).

20. Moteur électrique (12) selon l'une des revendications précédentes, **caractérisé en ce que**, dans chaque mode de fonctionnement et hors mode de fonctionnement, le coussinet de palier est pressé sur le corps de palier.

21. Moteur électrique (12) selon l'une des revendications précédentes, **caractérisé en ce que** le rotor (16) est conçu en tant que générateur de champ magnétique.

22. Utilisation du moteur électrique (12) selon l'une des revendications 1 à 21 en tant que pompe de circulation.

23. Pompe de circulation (10) qui est pourvue d'un moteur électrique (12) selon l'une des revendications 1 à 21.
